# NEUE EUROPÄISCHE PATENTSCHRIFT

(11) **EP 1 366 964 B2**
(45) Veröffentlichungstag und Bekanntmachung des Hinweises auf die Entscheidung über den Einspruch: **24.11.2010**
(45) Hinweis auf die Patenterteilung: 16.11.2005
(21) Anmeldenummer: 03011200.7
(22) Anmeldetag: 28.05.2003
(51) Int. Cl.: B60T 13/66, B60T 7/10

(54) **Feststellbremsanlage und Verfahren zum Betreiben einer Feststellbremsanlage**
A park brake system for vehicles and method for operating
Système de freinage de stationnement pour véhicules et procédé pour faire fonctionner

(30) Priorität: 31.05.2002 DE 10224182; 04.11.2002 DE 10251249
(43) Veröffentlichungstag der Anmeldung: 03.12.2003
(73) Patentinhaber: KNORR-BREMSE Systeme für Nutzfahrzeuge GmbH, 80809 München (DE)
(72) Erfinder: Hilberer, Eduard, 68766 Hockenheim (DE); Gerum, Eduard, 83026 Rosenheim (DE); Stöhr, Markus, 80993 München (DE)
(74) Vertreter: Schumacher & Willsau

(56) Entgegenhaltungen:
- EP-A- 0 207 275
- EP-A- 0 995 657
- EP-A- 0 995 659
- EP-A- 0 995 922
- EP-A1- 1 464 557
- EP-B1- 1 464 557
- WO-A-01/66376
- DE-A1- 19 835 638
- DE-C1- 19 638 226
- US-A- 4 900 098
- US-A- 5 394 137
- US-B1- 6 322 159
- US-B1- 6 322 161

## Beschreibung

Die Erfindung betrifft eine Feststellbremsanlage gemäß dem Oberbegriff von Anspruch 1.

Die Erfindung betrifft weiterhin ein Verfahren zum Betreiben einer Feststellbremsanlage gemäß dem Oberbegriff von Anspruch 13.

Eine gattungsgemäße Feststellbremsanlage, sowie ein gattungsgemäßes Verfahren sind aus dem Dokument EP-A- 0207 275 bekannt geworden

Derartige Feststellbremsanlagen kommen als Bremssysteme zum Einsatz, die von der Betriebsbremse des Fahrzeugs unabhängig sind. Sie dienen insbesondere zum Bremsen eines Fahrzeugs im abgestellten beziehungsweise geparkten Zustand.

Bei Nutzfahrzeugen umfassen die Feststellbremsanlagen in der Regel eine pneumatische Ventileinheit, die im Führerhaus des Nutzfahrzeugs untergebracht ist. Ein sogenannter "Booster" (Relaisventil) ist vorgesehen, um eine schnelle Belüftung und Entlüftung der Federspeicherzylinder zu bewirken.

Für den Fahrbetrieb und das Abstellen des Fahrzeugs sind grundsätzlich zwei verschiedene Zustände der Federspeicherzylinder erforderlich, nämlich ein belüfteter Zustand, bei dem das Fahrzeug nicht gebremst wird, und ein entlüfteter Zustand, in dem eine Bremswirkung zur Verfügung gestellt wird. Somit sind grundsätzlich zwei Einstellmöglichkeiten der Feststellbremsanlage ausreichend.

Da es jedoch besonders kritisch ist, wenn bei einem abgestellten Fahrzeug die Bremskraft abfällt und somit die Bremswirkung nicht mehr ausreicht - dies kann beispielsweise aufgrund von Dehnungen in den Gestängen bei längerer Parkdauer der Fall sein - ist man bestrebt, eine weitere Betriebsart der Feststellbremsanlage zur Verfügung zu stellen, die als Kontrollstellung bezeichnet werden kann. In dieser Kontrollstellung wird nach dem Einbremsen eines aus Zugfahrzeug und Anhänger bestehenden Nutzfahrzeugs die Feststellbremse in eine dritte Stellung gebracht, in der die Federspeicherzylinder des Anhängers beziehungsweise die Federspeicherzylinder von mehreren Anhängern nochmals belüftet werden, so dass die gesamte Bremswirkung von den Federspeicherzylindern des Zugfahrzeugs aufgebracht werden muss. Auf diese Weise kann man prüfen, ob eine ausreichende Sicherheitsreserve durch die Bremswirkung der Federspeicherzylinder des Zugfahrzeugs aufgebracht wird, die im Notfall den gesamten Zug halten kann.

Problematisch an derartigen Feststellbremsanlagen mit pneumatischer Ventileinheit im Führerhaus ist allerdings, dass ein erheblicher Aufwand aufgrund des Verlegens der Druckleitungen getrieben werden muss. Weiterhin ist bei den bestehenden Systemen die Diagnosenmöglichkeit im Hinblick auf die Ventile und das Gesamtsystem stark eingeschränkt.

Der Erfindung liegt die **Aufgabe** zugrunde, eine Feststellbremsanlage und ein Verfahren zum Betreiben einer Feststellbremsanlage zur Verfügung zu stellen, so dass die Probleme des Standes der Technik überwunden werden können und wobei insbesondere bei Verringerung des Aufwandes ein zuverlässiger Betrieb auch im Hinblick auf die Diagnosemöglichkeiten zur Verfügung gestellt werden kann.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Feststellbremsanlage dadurch auf, dass zusätzlich die kennzeichnenden Merkmale von Anspruch 1 realisiert sind. Auf diese Weise können Leitungsfunktionen, die gemäß dem Stand der Technik auf pneumatischer Basis realisiert wurden, durch elektrische Leitungsfunktionen ersetzt werden. Dies verringert den Montageaufwand und die Anzahl von benötigten Montageteilen erheblich, was zu einer deutlichen Kosteneinsparung führen kann. Diese Integration ist in vorteilhafter Weise im Sinne der Zielsetzung, die der vorliegenden Erfindung zugrunde liegt, nämlich der Reduktion des Aufwandes und der damit verbundenen Kosten. Es wird sichergestellt, dass das Fahrzeug bei einem plötzlichen Stromausfall gebremst wird, wobei diese Bremsung aufgrund der gedrosselten Entlüftung jedoch sanft erfolgt. Es kommt also nicht zu einer Vollbremsung; der Fahrer ist vielmehr noch in der Lage das Fahrzeug an eine sichere Position zu manövrieren. Der den Fahrzustand ermöglichende bestromte Zustand des Magnetventils kann beispielsweise ein im Sinne der Pulsweitenmodulation maximal bestromter Zustand sein. Durch Integration der Ventileinheit kann eine weitere Einsparung an Komponenten erfolgen, so dass auch dies im Sinne der allgemeinen Zielsetzung der vorliegenden Erfindung ist, die in der Vereinfachung und der damit verbundenen Kosteneinsparung liegt.

Die erfindungsgemäße Feststellbremsanlage ist in besonders vorteilhafter Weise dadurch weitergebildet, dass das Betätigungselement drei Einstellmöglichkeiten aufweist, wobei in einer Fahrstellung alle beteiligten Federspeicherzylinder belüftet werden, in einer Stoppstellung alle beteiligten Federspeicherzylinder entlüftet werden und in einer Kontrollstellung eine erste Gruppe von Federspeicherzylindern entlüftet wird beziehungsweise ist und eine zweite Gruppe von Federspeicherzylindern belüftet wird. In der Fahrstellung wird durch das Belüften aller beteiligter Federspeicherzylinder also die Bremswirkung aufgehoben, während durch das Entlüften in der Stoppstellung eine Bremswirkung erzielt wird. Um nun zu prüfen, ob eine ausgewählte Gruppe von Federspeicherzylindern in der Lage ist, eine erforderliche Bremswirkung allein aufzubringen, ist es möglich eine Kontrollstellung einzustellen, in der eine Gruppe von anderen Federspeicherzylindern belüftet wird.

In diesem Zusammenhang ist es von besonderem Vorteil, dass die erste Gruppe von Federspeicherzylindern einem Zugfahrzeug eines Nutzfahrzeugs zugeordnet ist und dass die zweite Gruppe von Federspeicherzylindern mindestens einem Anhänger eines Nutzkraftfahrzeugs zugeordnet ist. Die zweite Gruppe von Federspeicherzylindern kann also in der Kontrollstellung belüftet werden, so dass geprüft werden kann, ob die erforderliche Bremswirkung von den Bremsen des Zugfahrzeugs allein aufgebracht werden kann.

Die Erfindung ist in besonders nützlicher Weise dadurch weitergebildet, dass die elektronische Steuerung für die Feststellbremsanlage zumindest teilweise in einem Bordrechner integriert ist. Ein Bordrechner ist eine elektronische Baugruppe, die in einer Vielzahl von Nutzfahrzeugen vorhanden ist, so dass das Integrieren der elektronischen Steuerung in einen solchen Bordrechner eine vorteilhafte integrierende Maßnahme ist.

Im selben Sinne kann es von Vorteil sein, dass die elektronische Steuerung für die Feststellbremsanlage zumindest teilweise in einem Fahrzeugführungsrechner integriert ist.

Aus vergleichbarem Grund ist die Erfindung in besonders vorteilhafter Weise dadurch weitergebildet, dass die elektronische Steuerung für die Feststellbremsanlage zumindest teilweise in der Steuerung für ein elektronisches Bremssystem (EBS) integriert ist.

Aus Sicherheitsgründen ist zu bevorzugen, dass die elektrische Leitungsführung in der Feststellbremsanlage zumindest teilweise redundant ausgeführt ist. Hierdurch kann auch beim Ausfall einer elektrischen Leitung die gewünschte Bremswirkung erzielt werden. Der Ausfall der elektrischen Leitung kann dem Fahrzeugführer beispielsweise über den Fahrzeugführungsrechner mitgeteilt werden, so dass die defekte elektrische Leitung repariert beziehungsweise ausgetauscht werden kann.

Ebenfalls kann es nützlich sein, dass die Ventilanordnung ein über die elektronische Steuerung für die Feststellbremsanlage ansteuerbares Anhänger-Steuerventil umfasst. Das Lösen der einem Anhänger zugeordneten Bremsen erfolgt somit primär auch über ein elektrisches Signal, das dem Anhänger-Steuerventil zugeführt wird. Dies verringert den pneumatischen Schaltungsaufwand.

Es kann aber auch nützlich sein, dass die Ventilanordnung ein pneumatisch ansteuerbares Anhänger-Steuerventil umfasst, dessen Steuerkammer über ein über die elektronische Steuerung für die Feststellbremsanlage ansteuerbares Magnetventil entlüftet werden kann. Auf diese Weise erfolgt zwar eine Ansteuerung des Anhänger-Steuerventils auf pneumatischem Wege, so dass hierfür eine pneumatische Leitungsführung erforderlich ist; die Einbindung des erfindungsgemäßen Systems in bestehende Anlagen kann aber durch die Bereitstellung der Möglichkeit der pneumatischen Ansteuerbarkeit erleichtert werden. Zudem ist es möglich, das für die Ansteuerfunktion verwendete Magnetventil ebenfalls zum Beispiel in die EAC zu integrieren, so dass es auf diese Weise wiederum zu einer rationelleren Ausgestaltung des Systems kommt.

Besonders nützlich ist es, dass mindestens ein Drucksensor zum Messen von Drücken vorgesehen ist und dass der mindestens eine Drucksensor Eingangssignale für die elektronische Steuerung für die Feststellbremsanlage zur Verfügung stellt. Derartige Drucksensoren werden verwendet, um die Zustände der Feststellbremsanlage und der Betriebsbremsanlage des Nutzfahrzeugs zu überwachen, so dass Bremswirkungen optimiert werden können und letztlich an Sicherheit gewonnen werden kann. Derartige Drucksensoren, beispielsweise für die Betriebsbremsanlage, sind bei zahlreichen Nutzfahrzeugen in der EAC integriert. Gleichermaßen lässt sich auch die Drucküberwachung für die Feststellbremsanlage integrieren.

Beispielsweise kann die erfindungsgemäße Feststellbremsanlage so ausgelegt sein, dass zur Regelung der Pulsweitenmodulation ein Ausgangssignal des Drucksensors verwendbar ist. Hier kann beispielsweise eine Gradientenauswertung bei Belüftung beziehungsweise von Vorteil sein.

Beim Betrieb eines Nutzfahrzeugs mit der erfindungsgemäßen Feststellbremsanlage ist es insbesondere von Vorteil, dass die Bremskräfte der Feststellbremsanlage und der Betriebsbremsanlage beim Anfahren am Berg, zum Zwecke einer Überlastschutzfunktion, im Fehlerbetrieb, insbesondere bei einem Kreisdefekt, und bei sonstigen Ausnahmezuständen aufeinander abstimmbar sind, insbesondere durch eine Kompensation der Wirkung beziehungsweise der fehlenden Wirkung der Betriebsbremsanlage durch die Wirkung der Feststellbremsanlage.

Die Erfindung baut auf dem gattungsgemäßen Verfahren dadurch auf, dass zusätzlich die kennzeichnenden Merkmale von Anspruch 13 realisiert sind. Auf diese Weise werden die Vorteile und Besonderheiten der erfindungsgemäßen Feststellbremsanlage auch im Rahmen eines Verfahrens realisiert. Dies gilt auch für die nachfolgend angegebenen besonders bevorzugten Ausführungsformen des erfindungsgemäßen Verfahrens.

Es ist weiterhin in besonders bevorzugter Weise vorgesehen, dass das Betätigungselement drei Einstellmöglichkeiten aufweist, wobei in einer Fahrstellung alle beteiligten Federspeicherzylinder belüftet werden, in einer Stoppstellung alle beteiligten Federspeicherzylinder entlüftet werden und in einer Kontrollstellung eine erste Gruppe von Federspeicherzylindern entlüftet wird beziehungsweise ist und eine zweite Gruppe von Federspeicherzylindern belüftet wird.

Von besonderem Vorteil ist, dass die erste Gruppe von Federspeicherzylindern einem Zugfahrzeug eines Nutzkraftfahrzeugs zugeordnet ist und dass die zweite Gruppe von Federspeicherzylindern mindestens einem Anhänger eines Nutzkraftfahrzeugs zugeordnet ist.

Ebenso kann in nützlicher Weise vorgesehen sein, dass die elektronische Steuerung für die Feststellbremsanlage zumindest teilweise in einem Bordrechner integriert ist.

Im selben Sinne kann es im Rahmen des erfindungsgemäßen Verfahrens von Vorteil sein, dass die elektronische Steuerung für die Feststellbremsanlage zumindest teilweise in einem Fahrzeugführungsrechner integriert ist.

Aus vergleichbarem Grund ist die Erfindung in besonders vorteilhafter Weise dadurch weitergebildet, dass die elektronische Steuerung für die Feststellbremsanlage zumindest teilweise in der Steuerung für ein elektronisches Bremssystem (EBS) integriert ist.

Es kann weiterhin im Rahmen des erfindungsgemäßen Verfahrens nützlich sein, dass die elektrische Leitungsführung in der Feststellbremsanlage zumindest teilweise redundant ausgeführt ist.

Das erfindungsgemäße Verfahren ist in vorteilhafter Weise dadurch weitergebildet, dass die Ventilanordnung ein über die elektronische Steuerung für die Feststellbremsanlage ansteuerbares Anhänger-Steuerventil umfasst.

Es kann andererseits bevorzugt sein, dass die Ventilanordnung ein pneumatisch ansteuerbares Anhänger-Steuerventil umfasst, dessen Steuerkammer über ein über die elektronische Steuerung für die Feststellbremsanlage ansteuerbares Magnetventil entlüftet werden kann.

Ebenso kann in nützlicher Weise vorgesehen sein, dass in den Federspeicherzylindern Drücke gemessen werden und dass die gemessenen Drücke zu Eingangssignalen für die elektronische Steuerung für die Feststellbremsanlage umgesetzt werden.

In diesem Zusammenhang kann es vorteilhaft sein, dass die Regelung der Pulsweitenmodulation in Abhängigkeit von in den Federspeicherzylindern gemessenen Drücken erfolgt.

Das erfindungsgemäße Verfahren ist in besonders vorteilhafter Weise dadurch weitergebildet, dass die Bremskräfte der Feststellbremsanlage und der Betriebsbremsanlage beim Anfahren am Berg, zum Zwecke einer Überlastschutzfunktion, im Fehlerbetrieb, insbesondere bei einem Kreisdefekt, und bei sonstigen Ausnahmezuständen aufeinander abgestimmt werden, insbesondere durch eine Kompensation der Wirkung beziehungsweise der fehlenden Wirkung der Betriebsbremsanlage durch die Wirkung der Feststellbremsanlage.

Der Erfindung liegt die Erkenntnis zugrunde, dass durch Bereitstellung einer Feststellbremsanlage mit einer Steuerung auf elektronischer Basis der pneumatische Schaltungsaufwand in hohem Maße reduziert werden kann, wobei durch Integrierung der elektronischen Steuerung in bereits bestehende Steuerungselemente nur ein vertretbares Maß an elektrischem Aufwand getrieben werden muss. Neben der Rationalisierung der Anlage aufgrund von entfallendem pneumatischem Montageaufwand und aufgrund von entfallenden Montageteilen ist zu betonen, dass die Sicherheit der Anlage verbessert wird, da Überwachungs- und Diagnosefunktionen in verstärktem Maße und auf einfachere Weise zur Verfügung gestellt werden können. Auf der Basis der elektronischen Steuerung lassen sich zahlreiche Sicherheitsmaßnahmen einbauen. Beispielsweise kann vorgesehen sein, dass die Steuerung für die Feststellbremsanlage zwar in einem bereits bestehenden Steuergerät integriert ist, allerdings unter Verwendung eines zweiten Prozessors. Somit kann auch beim Ausfall des eigentlichen Prozessors des Steuergerätes eine Funktion der Feststellbremsanlage aufrechterhalten werden. Ebenfalls lassen sich beispielsweise Überlastschutzfunktionen erzeugen, da aufgrund der nunmehr möglichen umfassenden Überwachung des gesamten Bremssystems Additionskräfte verhindert werden können, die beispielsweise beim Betätigen der Betriebsbremse und der Feststellbremsanlage auftreten können. Auf diese Weise werden die Bremssättel der Fahrzeuge geschont. Ebenfalls kann an zahlreichen Stellen auf Druckbegrenzungsvorrichtungen verzichtet werden, da auch diese Funktion aufgrund der nunmehr in umfassender Weise realisierbaren Sensorik übernommen werden kann. Die vorliegende Erfindung zeichnet sich somit durch diese und zahlreiche andere Vorteile gegenüber dem Stand der Technik aus.

Die Erfindung wird nun mit Bezug auf die begleitenden Zeichnungen anhand bevorzugter Ausführungsformen beispielhaft erläutert.

Dabei zeigt:
- Figur 1: ein schematisches Diagramm zur Erläuterung einer nicht erfindungsgemäßen Feststellbremsanlage;
- Figur 2: ein weiteres schematisches Diagramm mit einer in Schnittansicht dargestellten Ventileinheit zur Erläuterung einer nicht erfindungsgemäßen Feststellbremsanlage;
- Figur 3: ein Blockschaltbild der Ventileinheit gemäß Figur 2;
- Figur 4: ein weiteres schematisches Diagramm mit einer in Schnittansicht dargestellten Ventileinheit zur Erläuterung einer nicht erfindungsgemäßen Feststellbremsanlage;
- Figur 5: ein weiteres schematisches Diagramm mit einer in Schnittansicht dargestellten Ventileinheit zur Erläuterung der vorliegende Erfindung; und
- Figur 6: ein Blockschaltbild der Ventileinheit gemäß Figur 5.

Bei der nachfolgenden Beschreibung besonders bevorzugter Ausführungsformen der Erfindung bezeichnen gleiche Bezugszeichen gleiche oder vergleichbare Komponenten.

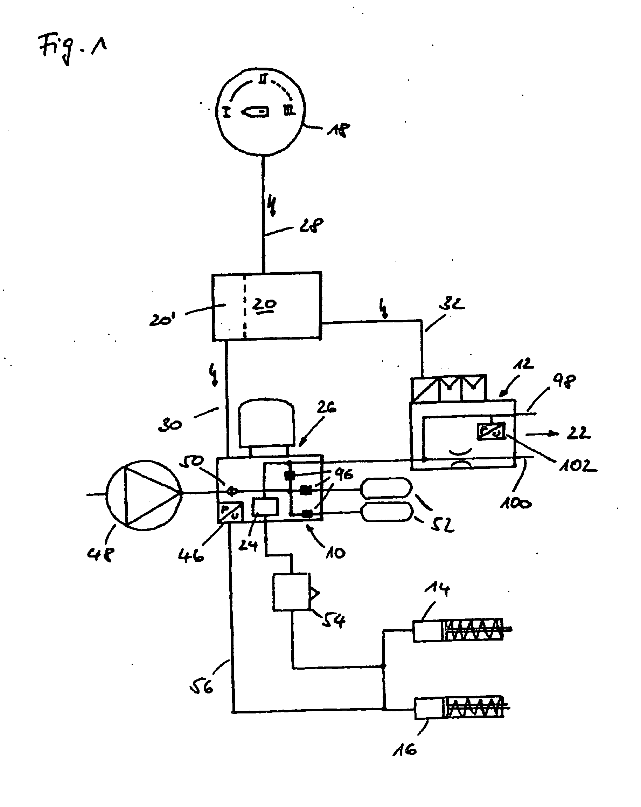

Figur 1 zeigt ein schematisches Diagramm. Es ist ein elektrisches Betätigungselement 18 zum Betätigen der schematisiert dargestellten Feststellbremsanlage vorgesehen. Dieses Betätigungselement 18 ist vorzugsweise im Führerhaus eines Lastkraftwagens angeordnet. Das Betätigungselement 18 ist elektrisch über eine Leitung 28 mit einer Steuerung 20, 20' verbunden. Die elektrische Leitung 28 ist vorzugsweise redundant ausgeführt, so dass im Fehlerfall eine ausreichende Sicherheitsreserve zur Verfügung steht. Dies kann auch für alle weiteren elektrischen Leitungen gelten, die im Rahmen der beschriebenen Feststellbremsanlage zum Einsatz kommen. Die Steuerung 20, 20' kann beispielsweise ein Bordrechner, ein Fahrzeugführungsrechner oder die Steuerung für ein elektronisches Bremssystem (EBS) bilden, wobei ein in die Steuerung 20 integrierter Teil 20' die Steuerung für die Feststellbremsanlage darstellt. Die Steuerung 20, 20' ist über eine elektrische Leitung 30 mit einer elektronischen Druckluftzufuhr (EAC) 26 verbunden, die neben anderen Komponenten eine Steuer/Regeleinheit 24 und eine Ventileinheit 10 umfasst, wobei zur Darstellung der Kreisfüllreihenfolge Kreisschutzventile 96 vorgesehen sind. Der EAC 26 wird durch eine Pumpe 48 Druckluft zugeführt, die über ein Rückschlagventil 50 der Ventileinheit 10 zugeleitet wird. Über Ausgangsanschlüsse der EAC 26 werden einerseits Druckluftbehälter 52 mit Druckluft versorgt. Weiterhin ist an die Federspeicherzylinder 14, 16 mit Druckluft geliefert. Zum schnellen Entlüften der Federspeicherzylinder 14, 16 ist weiterhin ein optionales Schnellentlüftungsventil 54 vorgesehen. In die EAC 26 ist ferner ein Drucksensor 46 integriert, der über eine Druckluftverbindung 56 den Druck in den Federspeicherzylindern 14, 16 messen kann. Die Federspeicherzylinder 14, 16 sind dem Zugfahrzeug eines Zuges mit Anhängern zugeordnet.

Zur Druckluftversorgung der Federspeicherzylinder 22 der Anhänger ist ein Anhänger-Steuerventil 12 vorgesehen, das ebenfalls mit Druckluft aus der EAC 26 versorgt wird. Zur Versorgung beziehungsweise Steuerung der Federspeicherzylinder 22 des Anhängers beziehungsweise der Anhänger sind eine Versorgungsleitung 100 und eine Steuerungsleitung 98 vorgesehen. In dem Anhänger-Steuerventil 12 ist ein Drucksensor 102 zur Drucküberwachung in der Steuerungsleitung 98 angeordnet. Die speziellen auf die Feststellbremsanlage bezogenen Funktionen des Anhänger-Steuerventils 12 werden über eine elektrische Verbindung 32 zwischen der Steuerung 20, 20' und dem Anhänger-Steuerventil bereitgestellt.

Die Feststellbremsanlage gemäß Figur 1 arbeitet wie folgt. Das Betätigungselement 18 hat drei Einstellmöglichkeiten I, II, III, die einer Fahrtstellung, einer Stoppstellung und einer Kontrollstellung entsprechen. In der Fahrtstellung werden sämtliche Federspeicherzylinder 14, 16, 22 belüftet, so dass keine Bremswirkung auftritt. Soll das Fahrzeug nun geparkt werden, so wird das Betätigungselement 18 in die Stoppstellung überführt. In diesem Fall werden sowohl die Federspeicherzylinder 14, 16 des Zuges als auch die Federspeicherzylinder 22 des Anhängers entlüftet. Soll nun überprüft werden, ob im Notfall die Bremswirkung des Zuges ausreichend wäre, das Fahrzeug zu halten, kann das Betätigungselement 18 in eine Kontrollstellung überführt werden. In diesem Fall kann über die elektrische Leitung 32 das Anhänger-Steuerventil 12 veranlasst werden, die Federspeicherzylinder 22 des Anhängers zumindest teilweise zu belüften, so dass der gesamte Zug durch die Bremskraft der nach wie vor entlüfteten Federspeicherzylinder 14, 16 gehalten werden muss.

Neben den beschriebenen Betriebsfunktionen der Feststellbremsanlage, die in vorteilhafter Weise durch die elektrische Implementierung realisiert werden und die aufgrund der Integration der elektronischen Steuerungsfunktionen in eine bestehende Steuereinheit 20 besonders rationell ausgeführt werden kann, hat die Feststellbremsanlage gemäß der vorliegenden Erfindung die weiteren Vorteile, dass zahlreiche Überwachungsfunktionen wahrgenommen werden können. Da das gesamte Bremssystem, das heißt Betriebsbremsanlage und Feststellbremsanlage, elektronisch gesteuert wird, können die verschiedenen Funktionen unter Berücksichtigung der aktuellen Situation aufeinander abgestimmt werden.

Im Rahmen der Beschreibung von Figur 1 wurde angegeben, dass die Funktionen der Steuerung der Feststellbremsanlage beispielsweise in einen Bordrechner, einen Fahrzeugführungsrechner oder in eine Steuerung für EBS integriert sind. Die EAC 26 empfängt dann elektrische Signale von dieser Steuerung 20, 20'. Ebenso ist es aber denkbar, dass die elektronischen Funktionen zur Steuerung der Feststellbremsanlage in die EAC 26 integriert sind, so dass auch hierdurch eine wirkungsvolle Rationalisierung erzielt werden kann. Derartige Teil- beziehungsweise Vollintegrationen werden nachfolgend erläutert.

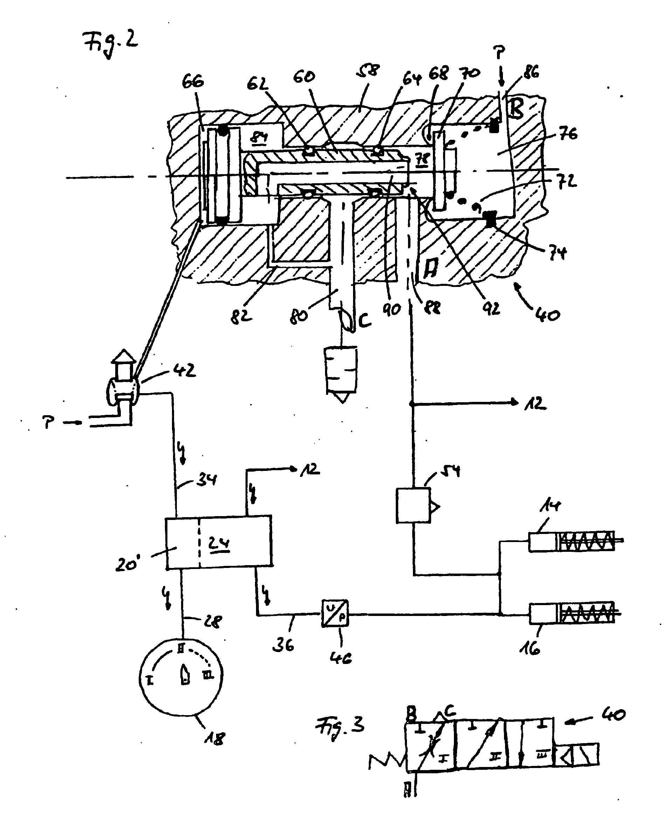

Figur 2 zeigt ein weiteres schematisches Diagramm mit einer in Schnittansicht dargestellten Ventileinheit 40. In dem hier dargestellten Fall ist die Steuerung 20' der Feststellbremsanlage in die Steuerung 24 der EAC 26 integriert. Zwischen dem Betätigungselement 18 und der Steuerung 24, 20' besteht eine elektrische Verbindung 28, so dass die Steuerung 24, 20' die Einstellung des Betätigungselementes 18 umsetzen kann. Eine Ventileinheit 40, die in die EAC 26 integriert ist, wird über ein Magnetventil 42 angesteuert, das eine elektrische Verbindung 34 zu der Steuerung 24, 20' aufweist. Die Ventileinheit 40 dient dem Belüften und dem Entlüften der Federspeicherzylinder 14, 16 des Zugfahrzeugs und, über das (nicht dargestellte) Anhänger-Steuerventil 12, der Federspeicherzylinder der Anhänger. Eine weitere elektrische Verbindung an der Steuerung 24, 20' dient der Kommunikation mit einem Anhänger-Steuerventil 12. Zur Schnellentlüftung der Federspeicherzylinder 14, 16 kann weiterhin ein Schnellentlüftungsventil 54 vorgesehen sein. Zur Überwachung des Druckes in den Federspeicherzylindern 14, 16 dient ein Drucksensor 46.

Vorzugsweise sind also die Steuerung 24, 20', das Magnetventil 42, die Ventileinheit 40 und der Drucksensor 46 Bestandteile der EAC 26, wogegen die das Anhänger-Steuerventil 12 betreffenden Funktionen zwar von der Steuerung 24, 20' bewirkt werden, jedoch außerhalb der EAC 26 umgesetzt werden.

Die Ventileinheit 40 umfasst ein 3/3-Ventil mit positiver Schaltüberdeckung, so dass die unterschiedlichen Schaltzustände bei realisierbaren Toleranzen durch variablen Steuerkolbenhub dargestellt werden können. Die Ventileinheit 40 umfasst ein Gehäuse 58, in dem ein.Steuerkolben 60 geführt wird, der mittels O-Ringen 62, 64 verschiedene Bereiche der Ventileinheit 40 gegeneinander abdichtet. Eine Steuerkammer 66 der Ventileinheit 40 steht über das Magnetventil 42 mit einer Druckluftversorgung in Verbindung. Die Ventileinheit 40 umfasst weiterhin einen Ventilsitz 68 und einen damit zusammenwirkenden Ventilteller 70, der über eine Feder 72, die sich am Gehäuse 58 oder an einem Vorsprung 74 des Gehäuses 58 abstützt. Wenn der Ventilsitz 68 abdichtend mit dem Ventilteller 70 zusammenwirkt, so wird ein Druckluftversorgungsraum 76 von einem den Steuerkolben 60 umgebenden Raum 78 getrennt. Das Gehäuse 40 umfasst weiterhin eine Entlüftungsbohrung 80, eine Drosselbohrung 82, die die Entlüftungsbohrung 80 mit einem Raum 84 um den Steuerkolben 60 verbindet, eine Druckluftzuführbohrung 86 und eine Ausgangsbohrung 88. Weiterhin umfasst der Steuerkolben 60 eine zentrale Bohrung, die den Raum 78 um den Steuerkolben 60 mit dem Raum 84 um den Steuerkolben 60 verbindet. Der Steuerkolben 60 umfasst einen Ventilsitz 92, der mit dem Ventilteller 70 zusammenwirken kann.

Unter Bezugnahme auf Figur 2 und Figur 3, wobei letztere ein Blockschaltbild des 3/3-Ventils zeigt, wird die Funktionsweise des 3/3-Ventils erläutert. Die Bohrungen in der Ventileinheit 40 in Figur 2 sind in Entsprechung zu den Bezeichnungen in Figur 3 mit A B C bezeichnet. Im dargestellten unbestromten Zustand des Magnetventils 42 wird der Steuerkammer 66 kein Druck zugeführt. Der Steuerkolben 60 befindet sich daher in der Darstellung gemäß Figur 2 in seiner linken Extremstellung. Dies kann beispielsweise dadurch unterstützt werden, dass in dem Raum 84 um den Steuerkolben 60 eine (nicht dargestellte) Feder angeordnet ist, die den Steuerkolben 60 nach links vorspannt. In diesem Zustand kann über die Bohrung 88, den Raum 78 um den Steuerkolben 60, die Bohrung 90 des Steuerkolbens 60, den Raum 84 um den Steuerkolben 60, die Drosselbohrung 82 und die Entlüftungsbohrung 80 eine gedrosselte Entlüftung erfolgen. Dies hat zur Folge, dass bei einem vollständigen Stromausfall und somit bei einer Überführung des Magnetventils 42 in einen vollständig unbestromten Zustand ein langsames, das heißt nicht ruckartiges, Einbremsen des Fahrzeugs erfolgt.

Indem das Magnetventil 42 teilweise bestromt wird, was vorzugsweise durch Pulsweitenmodulation erreicht wird, kann der Steuerkolben 60 ausgehend von seiner dargestellten Position durch Druckbeaufschlagung der Steuerkammer 66 nach rechts in einen Zwischenzustand verschoben werden. In diesem Zusammenhang wird darauf hingewiesen, dass die dargestellten Längen von Steuerkolben 60 und Gehäuse 40 nicht unbedingt maßstäblich gezeigt sein müssen. Im Teilbestromungszustand des Magnetventils 42, beispielsweise bei Bestromung von 50 %, wird der Steuerkolben 60 so weit nach rechts verschoben, dass der Ventilteller 70 nach wie vor abdichtend mit dem Ventilsitz 68 zusammenwirkt. Allerdings gibt im Unterschied zum unbestromten Zustand der O-Ring 62 eine Verbindung zwischen dem Raum 78 um den Steuerkolben 60 und der Entlüftungsbohrung 80 frei, so dass zusätzlich zu der oder anstatt der Entlüftung über die Drosselbohrung 82 eine direkte und somit schnelle Entlüftung der Federspeicherzylinder 14, 16 erfolgen kann.

Bei erhöhter Bestromung, das heißt beispielsweise bei vollständiger Bestromung, kann der Steuerkolben 60 dann noch weiter nach rechts verschoben werden, so dass der Ventilteller 70 vom Ventilsitz 78 abhebt und eine Druckluftverbindung über die Bohrung 86, den Druckluftversorgungsraum 76, den Raum 78 um den Steuerkolben und die Bohrung 88 zu den Federspeicherzylindern 14, 16 vorliegt. Auf diese Weise können die Federspeicherzylinder 14, 16 belüftet werden. Eine gleichzeitige Verbindung zwischen Druckluftversorgungsraum 76 und Entlüftung kann dadurch verhindert werden, dass der Ventilteller 70 mit einem weiteren Ventilsitz 92 des Steuerkolbens 60 abdichtend zusammenwirkt.

Der in Figur 2 dargestellte Zustand der Ventileinheit 40 ist also zum einen der Zustand, der sowohl während der Stoppstellung als auch während der Kontrollstellung der Feststellbremsanlage vorliegt, da in diesen Zuständen, die Federspeicherzylinder 14, 16 des Zugfahrzeugs entlüftet sind. Weiterhin dient der in Figur 2 dargestellte Zustand zur gedrosselten Entlüftung, beispielsweise bei einem plötzlichen Stromausfall. Der beschriebene Zwischenzustand des Steuerkolbens 60 wird zur Schnellentlüftung verwendet; der weiter nach rechts verschobene Zustand des Steuerkolbens 60 dient der Belüftung der Federspeicherzylinder und wird somit bei der Fahrt gewählt.

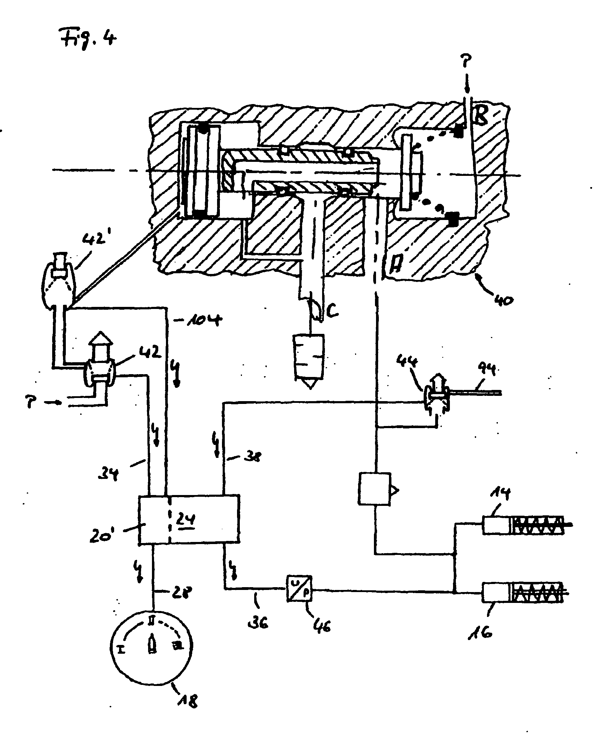

Figur 4 zeigt ein weiteres schematisches Diagramm mit einer in Schnittansicht dargestellten Ventileinheit 40. Die Darstellung entspricht in weiten Teilen der Darstellung gemäß Figur 2. Zusätzlich ist ein Magnetventil 44 und ein Magnetventil 42' dargestellt, die ebenfalls in die EAC 26 integriert werden können.

Das Magnetventil 44 ist über eine Leitung 38 mit der Steuerung 24, 20' verbunden. Im unbestromten Zustand des Magnetventils 44 wird eine Verbindung zwischen der Bohrung 88 der Ventileinheit 40 hergestellt. Im bestromten Zustand des Magnetventils 42 liegt somit eine Verbindung zwischen der Druckluftversorgung 86 und einer Druckluftansteuerung 94 eines Anhänger-Steuerventils vor. Durch Bestromen des Magnetventils 44 über die elektrische Verbindung 38 können auf diese Weise die dem Anhänger zugeordnete Feststellbremse unabhängig von dem Zustand der Federspeicherzylinder 14, 16 des Zugfahrzeugs gelöst werden.

Das Magnetventil 42' bietet die weitere Möglichkeit, den Steurkolben 60 der Ventileinheit 40 durch Bestromung über die mit der Steuerung 24, 20' verbundene elektrische Leitung 104 in jeder Stellung anzuhalten. Hierdurch wird die Möglichkeit der stufbaren Belüftung und Entlüftung zur Verfügung gestellt.

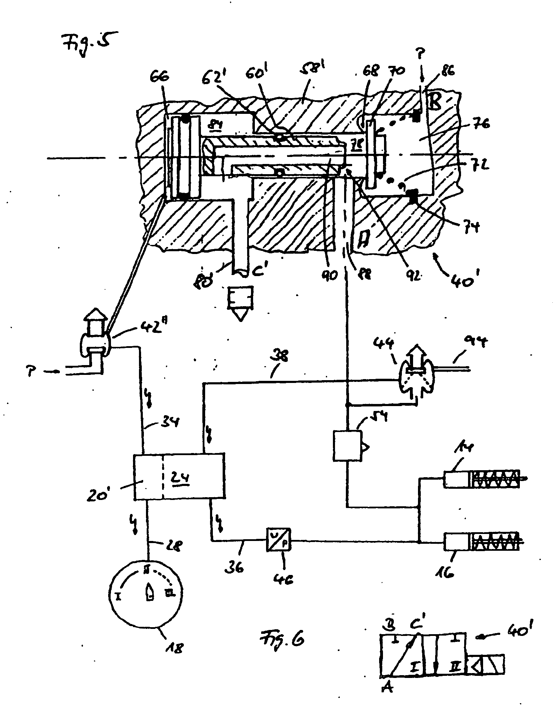

Figur 5 zeigt ein weiteres schematisches Diagramm mit einer in Schnittansicht dargestellten Ventileinheit 40' zur Erläuterung der vorliegende Erfindung. Die Ventileinheit 40' ist im Gegensatz zu der als 3/3-Ventil ausgebildeten Ventileinheit 40 gemäß den Figuren 2 und 4 als 3/2-Ventil ausgebildet. Dies hat den Hintergrund, dass auf den Schaltzustand der gedrosselten Entlüftung verzichtet wird.

In dem in Figur 5 dargestellten Schaltzustand findet eine Entlüftung über die Entlüftungsbohrung 80' statt. In dem zweiten Schaltzustand ist der Steuerkolben 60', der bei der vorliegenden Ausführung mit nur noch einem O-Ring 62' gegen das Gehäuse 58' abgedichtet ist, so weit nach rechts verschoben, dass über den Ventilsitz 68 eine Belüftung erfolgen kann.

Bei der Ausführungsform gemäß Figur 2 wird ein monostabiles Magnetventil 42 verwendet, das im stromlosen Zustand die Ventileinheit 40 in einen die gedrosselte Entlüftung bewirkenden Zustand überführt. Im Gegensatz hierzu wird bei der Ausführungsform gemäß Figur 5 ein bistabiles Magnetventil 42" verwendet. Dieses verharrt bei einem Stromausfall in dem Zustand, in dem es sich gerade befindet. Insbesondere wird hierdurch eine schlagartige Entlüftung im Fehlerfall vermieden. Derartige bistabile Magnetventile lassen sich beispielsweise realisieren, indem eine Ansteuerung über eine Treiberbrückenschaltung erfolgt. Hierbei bildet die Spule des Magnetventils die Brücke einer Brückenschaltung. Durch geeignete Beschaltung lässt sich eine Stromumkehr durch die Spule bewirken, die eine Umkehr des magnetischen Feldes und letztlich eine Änderung des Schaltzustandes des Magnetventils bewirken kann. Aufgrund nicht vorhandener Rückstellelemente bleibt das Magnetventil bei Stromausfall in unveränderter Stellung.

Figur 6 zeigt ein Blockschaltbild des Magnetventils gemäß Figur 5.

### Bezugszeichenliste

- 10: Ventileinheit
- 12: Anhänger-Steuerventil
- 14: Federspeicherzylinder Zugfahrzeug
- 16: Federspeicherzylinder Zugfahrzeug
- 18: Betätigungselement
- 20: Steuerung Bordrechner/Fahrzeugführungsrechner/EBS
- 20': Steuerung der Feststellbremsanlage
- 22: Federspeicherzylinder Anhänger
- 24: Steuerung EAC
- 26: EAC
- 28: elektrische Leitung
- 30: elektrische Leitung
- 32: elektrische Leitung
- 34: elektrische Leitung
- 36: elektrische Leitung
- 38: Leitung
- 40: Ventileinheit
- 40': Ventileinheit
- 42: Magnetventil
- 42': Magnetventil
- 42'': Magnetventil
- 44: Magnetventil
- 46: Drucksensor
- 48: Pumpe
- 50: Rückschlagventil
- 52: Druckluftbehälter
- 54: Schnellentlüftungsventil
- 56: Druckluftverbindung
- 58: Ventilgehäuse
- 60: Steuerkolben
- 60: Steuerkolben
- 62: O-Ring
- 62': O-Ring
- 64: O-Ring
- 66: Steuerkammer
- 68: Ventilsitz
- 70: Ventilteller
- 72: Feder
- 74: Vorsprung
- 76: Druckluftversorgungsraum
- 78: Raum um Steuerkolben
- 80: Entlüftungsbohrung
- 80': Entlüftungsbohrung
- 82: Drosselbohrung
- 84: Raum um Steuerkolben
- 86: Druckluftzuführungsbohrung
- 88: Ausgangsbohrung
- 90: Bohrung in Steuerkolben
- 92: Ventilsitz
- 94: Druckluftansteuerung
- 96: Kreisschutzventile
- 98: Steuerungsleitung
- 100: Versorgungsleitung
- 102: Drucksensor
- 104: elektrische Leitung

## Patentansprüche

1. Feststellbremsanlage, insbesondere für Nutzfahrzeuge, mit
- einer Ventilanordnung (10, 12) zum Belüften und zum Entlüften von Federspeicherzylindern (14, 16) und
- einem elektrischen Betätigungselement (18) mit mehreren Einstellmöglichkeiten zum Wählen verschiedener Zustände der Feststellbremsanlage, das mit einer elektronischen Steuerung (20') für die Feststellbremsanlage kommunizieren kann,
**dadurch gekennzeichnet,**
- **dass** die elektronische Steuerung (20') für die Feststellbremsanlage zumindest teilweise in eine elektronische Steuerung (24) einer elektronischen Luftaufbereitungsanlage mit Kreisschutzeinrichtung integriert ist,
- **dass** die Ventilanordnung eine in die elektronische Luftaufbereitungsanlage integrierte, als 3/2-Ventil ausgelegte Ventileinheit (40') zum Belüften und Entlüften der Federspeicherzylinder (14, 16) umfasst, wobei die Ventileinheit (40') mittels der elektronischen Steuerung (20') steuerbar ist,
- **dass** die Ventileinheit (40') über ein über die elektronische Steuerung für die Feststellbremsanlage ansteuerbares bistabiles Magnetventil (42") steuerbar ist,
- **dass** das Magnetventil (42") mittels Pulsweitenmodulation ansteuerbar ist,
- **dass** in einem ersten Zustand des Magnetventils (42") eine schnelle Entlüftung von Federspeicherzylindern (14, 16, 22) erfolgt und
- **dass** in einem zweiten Zustand des Magnetventils (42") eine Belüftung von Federspeicherzylindern (14, 16, 22) erfolgt.

2. Feststellbremsanlage nach Anspruch 1, **dadurch gekennzeichnet, dass** das Betätigungselement (18) drei Einstellmöglichkeiten aufweist, wobei
- in einer Fahrstellung alle beteiligten Federspeicherzylinder (14, 16, 22) belüftet werden,
- in einer Stoppstellung alle beteiligten Federspeicherzylinder (14, 16, 22) entlüftet werden und
- in einer Kontrollstellung eine erste Gruppe (14, 16) von Federspeicherzylindern entlüftet wird beziehungsweise ist und eine zweite Gruppe (22) von Federspeicherzylindern belüftet wird.

3. Feststellbremsanlage nach Anspruch 2, **dadurch gekennzeichnet,**
- **dass** die erste Gruppe (14, 16) von Federspeicherzylindern einem Zugfahrzeug eines Nutzkraftfahrzeugs zugeordnet ist und
- **dass** die zweite Gruppe (22) von Federspeicherzylindern mindestens einem Anhänger eines Nutzkraftfahrzeugs zugeordnet ist.

4. Feststellbremsanlage nach einem der vorangehenden Ansprüche, **dadurch gekennzeichnet, dass** die elektronische Steuerung (20') für die Feststellbremsanlage zumindest teilweise in einem Bordrechner (20) integriert ist.

5. Feststellbremsanlage nach einem der vorangehenden Ansprüche, **dadurch gekennzeichnet, dass** die elektronische Steuerung (20') für die Feststellbremsanlage zumindest teilweise in einem Fahrzeugführungsrechner (20) integriert ist.

6. Feststellbremsanlage nach einem der vorangehenden Ansprüche, **dadurch gekennzeichnet, dass** die elektronische Steuerung (20') für die Feststellbremsanlage zumindest teilweise in der Steuerung (20) für ein elektronisches Bremssystem (EBS) integriert ist.

7. Feststellbremsanlage nach einem der vorangehenden Ansprüche, **dadurch gekennzeichnet, dass** die elektrische Leitungsführung (28, 30, 32, 34, 36, 38) in der Feststellbremsanlage zumindest teilweise redundant ausgeführt ist.

8. Feststellbremsanlage nach einem der vorangehenden Ansprüche, **dadurch gekennzeichnet, dass** die Ventilanordnung ein über die elektronische Steuerung für die Feststellbremsanlage ansteuerbares Anhänger-Steuerventil (12) umfasst.

9. Feststellbremsanlage nach einem der vorangehenden Ansprüche, **dadurch gekennzeichnet, dass** die Ventilanordnung ein pneumatisch ansteuerbares Anhänger-Steuerventil umfasst, dessen Steuerkammer über ein über die elektronische Steuerung (20') für die Feststellbremsanlage ansteuerbares Magnetventil (44) entlüftet werden kann.

10. Feststellbremsanlage nach einem der vorangehenden Ansprüche, **dadurch gekennzeichnet,**
- **dass** mindestens ein Drucksensor (46) zum Messen von Drücken vorgesehen ist und
- **dass** der mindestens eine Drucksensor (46) Eingangssignale für die elektronische Steuerung für die Feststellbremsanlage zur Verfügung stellt.

11. Feststellbremsanlage nach einem der vorangehender Ansprüche, **dadurch gekennzeichnet, dass** zur Regelung der Pulsweitenmodulation ein Ausgangssignal des Drucksensors (46) verwendbar ist.

12. Feststellbremsanlage nach einem der vorangehenden Ansprüche, **dadurch gekennzeichnet, dass** die Bremskräfte der Feststellbremsanlage und der Betriebsbremsanlage
- beim Anfahren am Berg,
- zum Zwecke einer Überlastschutzfunktion,
- im Fehlerbetrieb, insbesondere bei einem Kreisdefekt, und
- bei sonstigen Ausnahmezuständen
aufeinander abstimmbar sind, insbesondere durch eine Kompensation der Wirkung beziehungsweise der fehlenden Wirkung der Betriebsbremsanlage durch die Wirkung der Feststellbremsanlage.

13. Verfahren zum Betreiben einer Feststellbremsanlage, insbesondere für Nutzfahrzeuge, mit
- einer Ventilanordnung (10, 12) zum Belüften und zum Entlüften von Federspeicherzylindern (14, 16) und
- einem elektrischen Betätigungselement (18) mit mehreren Einstellmöglichkeiten zum Wählen verschiedener Zustände der Feststellbremsanlage, das mit einer elektronischen Steuerung (20') für die Feststellbremsanlage kommuniziert,
**dadurch gekennzeichnet,**
- **dass** die elektronische Steuerung (20') für die Feststellbremsanlage zumindest teilweise durch eine elektronische Steuerung (24) einer elektronischen Luftaufbereitungsanlage mit Kreisschutzeinrichtung erfolgt,
- **dass** die Ventilanordnung eine in die elektronische Luftaufbereitungsanlage integrierte, als 3/2-Ventil ausgelegte Ventileinheit (40') zum Belüften und Entlüften der Federspeicherzylinder (14, 16) umfasst, wobei die Ventileinheit mittels der elektronischen Steuerung (20') gesteuert wird,
- **dass** die Ventileinheit (40') über ein über die elektronische Steuerung für die Feststellbremsanlage ansteuerbares bistabiles Magnetventil (42") gesteuert wird,
- **dass** das Magnetventil (42") mittels Pulsweitenmodulation angesteuert wird,
- **dass** in einem ersten Zustand des Magnetventils (42") eine schnelle Entlüftung von Federspeicherzylindern (14, 16, 22) erfolgt und
- **dass** in einem zweiten Zustand des Magnetventils (42") eine Belüftung von Federspeicherzylindern (14, 16, 22) erfolgt.

14. Verfahren nach Anspruch 13, **dadurch gekennzeichnet, dass** das Betätigungselement (18) drei Einstellmöglichkeiten aufweist, wobei
- in einer Fahrstellung alle beteiligten Federspeicherzylinder (14, 16, 22) belüftet werden,
- in einer Stoppstellung alle beteiligten Federspeicherzylinder (14, 16, 22) entlüftet werden und
- in einer Kontrollstellung eine erste Gruppe (14, 16) von Federspeicherzylindern entlüftet wird beziehungsweise ist und eine zweite Gruppe (22) von Federspeicherzylindern belüftet wird.

15. Verfahren nach Anspruch 13, **dadurch gekennzeichnet,**
- **dass** die erste Gruppe (14, 16) von Federspeicherzylindern einem Zugfahrzeug eines Nutzkraftfahrzeugs zugeordnet ist und
- **dass** die zweite Gruppe (22) von Federspeicherzylindern mindestens einem Anhänger eines Nutzkraftfahrzeugs zugeordnet ist.

16. Verfahren nach einem der Ansprüche 13 bis 15, **dadurch gekennzeichnet, dass** die elektronische Steuerung (20') für die Feststellbremsanlage zumindest teilweise in einem Bordrechner (20) integriert ist.

17. Verfahren nach einem der Ansprüche 13 bis 16, **dadurch gekennzeichnet, dass** die elektronische Steuerung (20') für die Feststellbremsanlage zumindest teilweise in einem Fahrzeugführungsrechner (20) integriert ist.

18. Verfahren nach einem der Ansprüche 13 bis 17, **dadurch gekennzeichnet, dass** die elektronische Steuerung (20') für die Feststellbremsanlage zumindest teilweise in der Steuerung (20) für ein elektronisches Bremssystem (EBS) integriert ist.

19. Verfahren nach einem der Ansprüche 13 bis 18, **dadurch gekennzeichnet, dass** die elektrische Leitungsführung (28, 30, 32, 34, 36, 38) in der Feststellbremsanlage zumindest teilweise redundant ausgeführt ist.

20. Verfahren nach einem der Ansprüche 13 bis 19, **dadurch gekennzeichnet, dass** die Ventilanordnung ein über die elektronische Steuerung für die Feststellbremsanlage ansteuerbares Anhänger-Steuerventil (12) umfasst.

21. Verfahren nach einem der Ansprüche 13 bis 20, **dadurch gekennzeichnet, dass** die Ventilanordnung ein pneumatisch ansteuerbares Anhänger-Steuerventil umfasst, dessen Steuerkammer über ein über die elektronische Steuerung (20') für die Feststellbremsanlage ansteuerbares Magnetventil (44) entlüftet werden kann.

22. Verfahren nach einem der Ansprüche 13 bis 21, **dadurch gekennzeichnet,**
- **dass** in den Federspeicherzylindern (14, 16, 22) Drücke gemessen werden und
- **dass** die gemessenen Drücke zu Eingangssignalen für die elektronische Steuerung für die Feststellbremsanlage umgesetzt werden.

23. Verfahren nach Anspruch 13 bis 22, **dadurch gekennzeichnet, dass** die Regelung der Pulsweitenmodulation in Abhängigkeit von in den Federspeicherzylindern (14, 16, 22) gemessenen Drücken erfolgt.

24. Verfahren nach einem der Ansprüche 13 bis 23, **dadurch gekennzeichnet, dass** die Bremskräfte der Feststellbremsanlage und der Betriebsbremsanlage
- beim Anfahren am Berg,
- zum Zwecke einer Überlastschutzfunktion,
- im Fehlerbetrieb, insbesondere bei einem Kreisdefekt, und
- bei sonstigen Ausnahmezuständen
aufeinander abgestimmt werden, insbesondere durch eine Kompensation der Wirkung beziehungsweise der fehlenden Wirkung der Betriebsbremsanlage durch die Wirkung der Feststellbremsanlage.

## Claims

1. Parking-brake system, in particular for heavy-duty motor vehicles, comprising
- a valve system (10, 12) for aerating and venting spring-loaded cylinders (14, 16) and
- an electrical actuator element (18) presenting several potential settings for selection of various conditions of the parking-brake-brake system, which element is capable of communicating with an electronic controller (20') for the parking-brake-brake system,
**characterised in that**
- said electronic controller (20') for the parking-brake system is integrated at least partly into an electronic controller (24) of an electronic air processing system including circuit protector means,
- said valve system includes a valve unit (40), which is designed as 3/2-type valve and integrated into said electronic air processing system, for aerating and venting said spring-loaded cylinder (14, 16), with said valve unit (40') being controllable by means of said electronic controller (20'),
- said valve unit (40') is controlled via a bistable solenoid valve (42") controllable via said electronic controller for the parking-brake system,
- said solenoid valve (42") is controlled by pulse width modulation,
- a rapid ventilation of spring-loaded cylinders (14, 16, 22) is carried out in a first state of said solenoid valve (42"), and
- aeration of spring-loaded cylinders (14, 16, 22) is carried out in a second state of said solenoid valve (42").

2. Parking brake system according to Claim 1, **characterised in that** said actuator element (18) comprises three potential settings, wherein
- all spring-loaded cylinders involved (14, 16, 22) are aerated in a driving position,
- all spring-loaded cylinders involved (14, 16, 22) are vented in a stop position, and
- a first group of spring-loaded cylinders (14, 16) are aerated in a checking position, with a second group (22) of spring-loaded cylinders being vented.

3. Parking brake system according to Claim 2, **characterised in that**
- said first group (14, 16) of spring-loaded cylinders is associated with a tractor vehicle of a heavy-duty motor vehicle, and
- said second group (22) of spring-loaded cylinders is associated with at least one trailer of a heavy-duty motor vehicle.

4. Parking brake system according to any of the preceding Claims, **characterised in that** said electronic controller (20') for the parking-brake system is integrated at least partly in an on-board computer (20)

5. Parking brake system according to any of the preceding Claims, **characterised in that** said electronic controller (20') for the parking-brake system is integrated at least partly in a vehicle driving computer (20).

6. Parking brake system according to any of the preceding Claims, **characterised in that** said electronic controller (20) for the parking-brake system is integrated at least partly in said controller (20) for an electronic brake system (EBS).

7. Parking brake system according to any of the preceding Claims, **characterised in that** said electronic driving controller (28, 30, 32, 34, 36, 38) is designed, at least partly in a redundant form, in the parking-brake system.

8. Parking brake system according to any of the preceding Claims, **characterised in that** said valve system comprises a trailer control valve (12) controllable via said electronic controller for the parking-brake system.

9. Parking brake system according to any of the preceding Claims, **characterised in that** said valve system comprises a pneumatically controllable trailer control valve whose control chamber is adapted for being ventilated via a solenoid valve (44) controllable via said electronic controller (20').

10. Parking brake system according to any of the preceding Claims, **characterised in that**
- at least one pressure gauge (46) is provided for measuring pressures, and
- said at least one pressure gauge (46) provides input signals for said electronic controller for the parking-brake system.

11. Parking brake system according to any of the preceding Claims, **characterised in that** an output signal from said pressure gauge (46) is usable for controlling the pulse width modulation.

12. Parking brake system according to any of the preceding Claims, **characterised in that** the braking forces of the parking-brake system and the service brake system are synchronised with each other
- in uphill start-up,
- for the purpose of an overload protection function,
- in an error case, specifically in the case of a circuit defect, and
- in any other exceptional states,
specifically by compensation of the effect or the missing effect of the service brake system by the effect of the parking-brake system.

13. Method of operating a parking-brake system, specifically for heavy-duty vehicles, comprising
- a valve system (10, 12) for aerating and venting spring-loaded cylinders (14, 16) and
- an electrical actuator element (18) presenting several potential settings for f
- selection of various conditions of the parking-brake system, which element is capable of communicating with an electronic controller (20') for the parking-brake system,
**characterised in that**
- said electronic controller (20') for the parking-brake system is implemented at least partly by an electronic controller (24) of an electronic air processing system including circuit protector means, and
- said valve system includes a valve unit (40'), which is designed as 3/2-type valve and is integrated into said electronic air processing system, for aerating and venting said spring-loaded cylinder (14, 16), with said valve unit (40') being controlled by means of said electronic controller (20')
- said valve unit (40') is controlled via a bistable solenoid valve (42") controllable via said electronic controller for the parking-brake system,
- said solenoid valve (42") is controlled by pulse width modulation,
- a rapid ventilation of spring-loaded cylinders (14, 16, 22) is carried out in a first state of said solenoid valve (42"), and
- aeration of spring-loaded cylinders (14, 16, 22) is carried out in a second state of said solenoid valve (42").

14. Method according to Claim 13, **characterised in that** said actuator element (18) presents three potential settings, wherein
- all spring-loaded cylinders involved (14, 16, 22) are aerated in a driving position,
- all spring-loaded cylinders involved (14, 16, 22) are vented in a stop position, and
- a first group of spring-loaded cylinders (14, 16) are aerated in a checking position, with a second group (22) of spring-loaded cylinders being vented.

15. Method according to Claim 13, **characterised in that**
- said first group (14, 16) of spring-loaded cylinders is associated with a tractor vehicle of a heavy-duty motor vehicle, and
- said second group (22) of spring-loaded cylinders is associated with at least one trailer of a heavy-duty motor vehicle.

16. Method according to any of the Claims 13 to 15, **characterised in that** said electronic controller (20') for the parking-brake system is integrated, at least partly, into an on-board computer (20).

17. Method according to any of the Claims 13 to 16, **characterised in that** said electronic controller (20') for the parking-brake system is integrated, at least partly, into a vehicle driving computer (20).

18. Method according to any of the Claims 13 to 17, **characterised in that** said electronic controller (20') for the parking-brake system is integrated, at least partly, into the controller (20) for an electronic brake system (EBS).

19. Method according to any of the Claims 13 to 18, **characterised in that** said electronic driving controller (28, 30, 32, 34, 36, 38) is designed, at least partly, in a redundant form in the parking-brake system.

20. Method according to any of the Claims 13 to 19, **characterised in that** said valve system includes a trailer control valve (12) controllable via said electronic controller for the parking-brake system.

21. Method according to any of the Claims 13 to 20, **characterised in that** said valve system includes a pneumatically controllable trailer control valve whose control chamber is suitable for being aerated via a solenoid valve (44) controllable via said electronic controller (20') for the parking-brake system.

22. Method according to any of the Claims 13 to 21, **characterised in that**
- pressures are measured in said spring-loaded cylinders (14, 16, 22), and
- the measured pressures are converted into input signals for said electronic controller for the parking-brake system.

23. Method according to Claims 13 to 22, **characterised in that** the control of pulse width modulation is realised as a function of pressures measured in said spring-loaded cylinders (14, 16, 22).

24. Method according to Claims 13 to 23, **characterised in that** the braking forces of the parking-brake system and the service brake system are synchronised with each other
- in uphill start-up,
- for the purpose of an overload protection function,
- in an error case, specifically in the case of a circuit defect, and
- in any other exceptional states,
specifically by compensation of the effect or the missing effect of the service brake system by the effect of the parking-brake system.

## Revendications

1. Système des freins de stationnement, en particulier pour véhicules lourds, comprenant
- un système de soupapes (10, 12) pour l'aération et la ventilation des cylindres à accumulateurs (14, 16) et
- un élément acteur électrique (18) présentant plusieurs valeurs réglées potentielles pour la sélection des conditions différentes du système des freins de stationnement, cet élément étant apte à communiquer avec une unité de commande électronique (20') pour le système des freins de stationnement,
**caractérisé en ce que**
- ladite unité de commande électronique (20') pour le système des freins de stationnement est intégrée, au moins en partie, dans une unité de commande électronique (24) d'un système électronique de traitement de l'air, qui renferme des moyens protecteurs de circuit,
- ledit système de soupapes comprend une unité à soupapes (40'), conçue sous forme d'une soupape du type 3/2 et intégrée dans ledit système électronique de traitement de l'air, pour l'aération et la ventilation dudit cylindre à accumulateur (14, 16), à ladite unité à soupapes (40') étant commandable moyennant ladite unité de commande électronique (20'),
- ladite unité à soupapes (40') est commandée via une électrovanne (42") bistable, commandable via ladite unité de commande électronique pour le système des freins de stationnement,
- ladite électrovanne (42") est commandée par modulation d'impulsions en largeur,
- une ventilation rapide des cylindres à accumulateurs (14, 16, 22) est réalisée en un premier état des ladite électrovanne (42") et
- l'aération des cylindres à accumulateurs (14, 16, 22) est réalisée en un deuxième état de ladite électrovanne (42").

2. Système des freins de stationnement selon la revendication 1, **caractérisé en ce que** ledit élément acteur (18) comprend trois positions potentielles de réglage, dans lequel
- tous les cylindres à accumulateurs respectifs (14, 16, 22) sont aérés en une position de marche,
- tous les cylindres à accumulateurs respectifs (14, 16, 22) sont ventilés en une position d'arrêt, et
- un premier group de cylindres à accumulateurs (14, 16) sont aérés en une position des surveillance, à un deuxième groupe (22) de cylindres à accumulateurs étant ventilés.

3. Système des freins de stationnement selon la revendication 2, **caractérisé en ce que**
- ledit premier groupe (14, 16) de cylindres à accumulateurs est affecté à un véhicule tracteur d'un véhicule lourd, et
- ledit deuxième groupe (22) de cylindres à accumulateurs est affecté à au moins une remorque d'un véhicule lourd.

4. Système des freins de stationnement selon une quelconque des revendications précédentes, **caractérisé en ce que** ladite unité de commande électronique (20') pour le système des freins de stationnement est intégrée, au moins en partie, dans un ordinateur de bord (20).

5. Système des freins de stationnement selon une quelconque des revendications précédentes, **caractérisé en ce que** ladite unité de commande électronique (20') pour le système des freins de stationnement est intégrée, au moins en partie, dans un ordinateur de marche du véhicule (20).

6. Système des freins de stationnement selon une quelconque des revendications précédentes, **caractérisé en ce que** ladite unité de commande électronique (20) pour le système des freins de stationnement est intégrée, au moins en partie, dans ladite unité de commande (20) pour un système de freinage électronique (EBS).

7. Système des freins de stationnement selon une quelconque des revendications précédentes, **caractérisé en ce que** ladite unité de commande électronique de marche (28, 30, 32, 34, 36, 38) est conçue, au moins en partie sous forme redondante, dans le système des freins de stationnement.

8. Système des freins de stationnement selon une quelconque des revendications précédentes, **caractérisé en ce que** ledit système de soupapes comprend une soupape de commande de la remorque (12), qui est commandable via ladite unité de commande électronique pour le système des freins de stationnement.

9. Système des freins de stationnement selon une quelconque des revendications précédentes, **caractérisé en ce que** ledit système de soupapes comprend une soupape de commande de la remorque à opération pneumatique, dont la chambre de commande est apte à être ventilée via une électrovanne (44) commandable via ladite unité de commande électronique (20')

10. Système des freins de stationnement selon une quelconque des revendications précédentes, **caractérisé en ce que**
- au moins un manomètre (46) est disposé à mesurer des pressions, et
- ledit au moins un manomètre (46) fournit des signaux d'entrée pour ladite unité de commande électronique pour le système des freins de stationnement.

11. Système des freins de stationnement selon une quelconque des revendications précédentes, **caractérisé en ce qu'**un signal de sortie dudit manomètre (46) est utile à commander la modulation d'impulsions en largeur.

12. Système des freins de stationnement selon une quelconque des revendications précédentes, **caractérisé en ce que** les efforts de freinage du système des freins de stationnement et du système des freins de service sont synchronisés l'un avec l'autre
- au démarrage en montée,
- aux fins d'une fonction de protection contre des surcharges,
- aux cas des erreurs, particulièrement au cas d'un circuit défectueux, et
- en tout autre état exceptionnel,
en particulier par compensation de l'effet ou de l'absence d'un effet du système des freins des service par l'effet du système des freins de stationnement.

13. Procédé à opérer un système des freins de stationnement, en particulier pour véhicules lourds, comprenant
- un système de soupapes (10, 12) pour l'aération et la ventilation des cy lindres à accumulateurs (14, 16) et
- un élément acteur électrique (18) présentant plusieurs valeurs réglées potentielles pour la sélection des conditions différentes du système des freins de stationnement, cet élément étant apte à communiquer avec une unité de commande électronique (20') pour le système des freins de stationnement,
**caractérisé en ce que**
- ladite unité de commande électronique (20') pour le système des freins de stationnement est intégrée, au moins en partie, dans une unité de commande électronique (24) d'un système électronique de traitement de l'air, qui renferme des moyens protecteurs de circuit,
- ledit système de soupapes comprend une unité à soupapes (40'), qui est conçue sous forme d'une soupape (40') du type 3/2 et intégrée dans ledit système électronique de traitement de l'air, pour l'aération et la ventilation dudit cylindre à accumulateur (14, 16), à ladite unité à soupapes (40') étant commandable moyennant ladite unité de commande électronique (20'),
- ladite unité à soupapes (40') est commandée via une électrovanne (42") bistable, qui est commandable via ladite unité de commande électronique pour le système des freins de stationnement,
- ladite électrovanne (42") est commandée par modulation d'impulsions en largeur,
- une ventilation rapide des cylindres à accumulateurs (14, 16, 22) est réalisée en un premier état de ladite électrovanne (42") et
- l'aération des cylindres à accumulateurs (14, 16, 22) est réalisée en un deuxième état de ladite électrovanne (42").

14. Procédé selon la revendication 13, **caractérisé en ce que** ledit élément acteur (18) présente trois positions de réglage potentielles, dans lequel
- tous les cylindres à accumulateurs respectifs (14, 16, 22) sont aérés en une position de marche,
- tous les cylindres à accumulateurs respectifs (14, 16, 22) sont ventilés en une position d'arrêt, et
- un premier groupe de cylindres à accumulateurs (14, 16) est aéré en une position de surveillance, un deuxième groupe (22) de cylindres à accumulateurs étant ventilé.

15. Procédé selon la revendication 13, **caractérisé en ce que**
- ledit premier groupe (14, 16) de cylindres à accumulateurs est affecté à un véhicule tracteur d'un véhicule lourd, et
- ledit deuxième groupe (22) de cylindres à accumulateurs est affecté à au moins une remorque d'un véhicule lourd.

16. Procédé selon une quelconque des revendications 13 à 15, **caractérisé en ce que** ladite unité de commande électronique (20') pour le système des freins de stationnement est intégrée, au moins en partie, dans un ordinateur de bord (20).

17. Procédé selon une quelconque des revendications 13 à 16, **caractérisé en ce que** ladite unité de commande électronique (20') pour le système des freins de stationnement est intégrée, au moins en partie, dans un ordinateur de marche de véhicule (20).

18. Procédé selon une quelconque des revendications 13 à 17, **caractérisé en ce que** ladite unité de commande électronique (20') pour le système des freins de stationnement est intégrée, au moins en partie, dans l'unité de commande (20) pour un système des freins électronique (EBS).

19. Procédé selon une quelconque des revendications 13 à 18, **caractérisé en ce que** ladite unité de commande électronique de marche (28, 30, 32, 34, 36, 38) est conçue, au moins en partie, sous forme redondante dans le système des freins de stationnement.

20. Procédé selon une quelconque des revendications 13 à 19, **caractérisé en ce que** ledit système de soupapes comprend une soupape de commande de la remorque (12) commandable via ladite unité de commande électronique pour le système des freins de stationnement.

21. Procédé selon une quelconque des revendications 13 à 20, **caractérisé en ce que** ledit système de soupapes comprend une soupape de commande de remorque, à commande pneumatique, dont la chambre de commande est apte à être aérée via une électrovanne (44) commandable via ladite unité de commande électronique (20') pour le système des freins de stationnement.

22. Procédé selon une quelconque des revendications 13 à 21, **caractérisé en ce que**
- des pressions sont mesurées dans lesdits cylindres à accumulateurs (14, 16, 22), et
- les pressions mesurées sont converties en signaux d'entrée ladite unité de commande électronique pour le système des freins de stationnement.

23. Procédé selon la revendications 13 à 22, **caractérisé en ce que** la commande de la modulation d'impulsions en largeur se fait en fonction des pressions mesurées dans lesdits cylindres à accumulateurs (14, 16, 22).

24. Procédé selon les revendications 13 à 23, **caractérisé en ce que** les efforts de freinage du système des freins de stationnement et du système des freins de service sont synchronisés l'un avec l'autre
- au démarrage en montée,
- aux fins d'une fonction de protection contre des surcharges,
- aux cas d'erreur, en particulier au cas d'un circuit défectueux, et
- en tout autre cas exceptionnel,
en particulier par compensation de l'effet ou de l'absence d'un effet du système des freins de service par l'effet du système des freins de stationnement.
